# EUROPEAN PATENT APPLICATION

(11) **EP 4 215 475 A1**
(43) Date of publication of application: **26.07.2023**
(21) Application number: 22192913.6
(22) Date of filing: 30.08.2022
(51) Int. Cl.: B66F 11/04, B62D 7/15, B62D 7/06, B66F 9/075

(54) **SMALL SCISSOR AERIAL WORK PLATFORM AND TRAVELING CHASSIS THEREOF**

(30) Priority: 31.12.2021 CN 202210229535
(71) Applicant: Zhejiang Dingli Machinery Co., LTD., Leidian Town Deqing, Zhejiang 313219 (CN)
(72) Inventor: Zhong, Xu, Huzhou, 313219 (CN); Shugen, Xu, Huzhou, 313219 (CN)
(74) Representative: Garavelli, Paolo

(57) **Abstract**

The present disclosure relates to the technical field of mechanical equipment for aerial works, in particular to a small scissor aerial work platform and a traveling chassis thereof. The traveling chassis includes a base (1) and oppositely-arranged left and right steering wheel assemblies (2). The base (1) is of a concave structure and a scissor-stored groove (11) with an upward opening is formed in the base. A left wheel set accommodating groove (12) and a right wheel set accommodating groove (13) which are used for accommodating the steering wheel assemblies (2) and provided with downward openings are further formed in a front end of the base (1), and a lower portion of the scissor-stored groove (11) is located between the left wheel set accommodating groove (12) and the right wheel set accommodating groove (13). According to further embodiments, the chassis further comprises left and right steering control mechanisms and each steering control mechanism comprises an electric push rod device (3).

## Description

### TECHNICAL FIELD

The present disclosure relates to the technical field of mechanical equipment for aerial works, in particular to a small scissor aerial work platform and a traveling chassis thereof.

### BACKGROUND ART

An aerial work platform is a product serving mobile aerial works such as aerial works, equipment installation and overhauls of various industries. Related products of the aerial work platform mainly include a scissor aerial work platform, a vehicle-mounted aerial work platform, a crank-propelled aerial work platform, a self-propelled aerial work platform, an aluminum alloy aerial work platform and a cylinder-sleeving-type aerial work platform. Wherein, the scissor aerial work platform usually includes a base, a wheel assembly is arranged at a bottom of the base, a lifting device is arranged on the base, a work platform is arranged on the lifting device, and the wheel assembly is a mechanism for driving the scissor aerial work platform to move. The lifting device in the common scissor work aerial platform on the current market is arranged above the base, the wheel assembly is arranged below the base, and the base itself has a certain thickness that separates the lifting mechanism from the wheel assembly, so that there is no interference between them. In this case, when scissors are in a folded state, and although the work platform above the scissors has been already in the lowest state, the work platform is still at a high height as a total thickness of the wheel assembly, the base and the scissors in the folded state is large. According to regulations of some countries (e.g., the United States), when the scissors are in the initial folded state, and once a height of the scissor aerial work platform exceeds a standard height stipulated by the United States, the scissor aerial work platform must be provided with a ladder, so that a user can conveniently enter the work platform by climbing the ladder. However, for a manufacturer, equipment cost may be increased as well as a space occupied by the whole equipment may be increased due to arrangement of the ladder; and for the user, climbing the ladder is troublesome. In order to meet the regulations of the above countries (e.g., the Unites States), the current scissor aerial work platform required to be exported to the United States will be provided with the ladder, and any good solution to avoid installation of the ladder has not been found yet.

In addition, two steering wheels of existing scissor aerial work platform equipment mostly rotate together after being connected by a connecting rod. For example, Chinese patent with an application number: 201520189981.9 discloses a traveling device, which is used for the scissor aerial work platform, and includes a left steering wheel, a right steering wheel, a left wheel carrier, a right wheel carrier, a linkage frame, a steering cylinder and a steering bent plate. The left steering wheel and the right steering wheel are rotationally installed on the left wheel carrier and the right wheel carrier respectively and driven respectively by a left driving motor fixed to the left wheel carrier and a right drive motor fixed to the right wheel carrier. The linkage frame is driven by the steering cylinder to linearly move, so as to drive the steering bent plate, so the steering bent plate pulls the left wheel carrier and the right wheel carrier to rotate to achieve steering. In the patent, the steering cylinder drives the linkage frame to simultaneously drive the left and the right steering wheels to rotate, and the linkage frame is installed above the wheels, and transversely extends in a left and right direction. A chassis body cannot go over the linkage frame to occupy a space between the left and the right steering wheels due to the existence of the linkage frame, so that the chassis body is at a high position, resulting in a high initial height of scissors installed on a chassis, and a ladder usually must be additionally arranged in this case to be climbed by the user.

### SUMMARY

The present disclosure makes an improvement in order to solve the problems in the prior art, that is, a technical problem to be solved by the present disclosure is to provide a traveling chassis. The traveling chassis includes a base and oppositely-arranged left and right steering wheel assemblies. The base is of a concave structure, a scissor-stored groove with an upward opening is formed in the base, a left wheel set accommodating groove and a right wheel set accommodating groove which are used for accommodating the steering wheel assemblies and provided with downward openings are further formed in a front end of the base, and a lower portion of the scissor-stored groove is located between the left wheel set accommodating groove and the right wheel set accommodating groove.

As a preference of the present disclosure, the traveling chassis further includes left and right steering control mechanisms, the left steering control mechanism can drive the left steering wheel assembly to steer, and the right steering control mechanism can drive the right steering wheel assembly to steer.

As a preference of the present disclosure, the base includes left and right supporting box bodies and a supporting bottom plate transversely erected between the two supporting box bodies, the scissor-stored groove is enclosed by the supporting box bodies and the supporting bottom plate, the left wheel set accommodating groove is located in a front end of the left supporting box body, the right wheel set accommodating groove is located in a front end of the right supporting box body, accommodating chambers are formed in the supporting box bodies, and the steering control mechanisms are located in the accommodating chambers.

As a preference of the present disclosure, each steering control mechanism includes an electric push rod device, each electric push rod device includes a drive base and an extending-out rod, an extending-out top end of each extending-out rod is rotationally connected with the corresponding steering wheel assembly, and each drive base is rotationally connected with the corresponding supporting box body.

As a preference of the present disclosure, each steering wheel assembly includes a steering wheel seat, a wheel rotationally installed on the steering wheel seat, a rotary shaft fixed to the steering wheel seat, and a steering support rod as so. The rotary shafts upright penetrate into the supporting box bodies, and can rotate around their central axes, the steering support rods extend into the supporting box bodies, and are rotationally connected with the extending-out top ends of the extending-out rods, and arc-shaped through grooves allowing the steering support rods to penetrate and move are formed in the supporting box bodies.

As a preference of the present disclosure, the traveling chassis further includes left and right rear drive wheels and left and right wheel motors, wherein the left wheel motor drives the left rear drive wheel to rotate, and the right wheel motor drives the right rear drive wheel to rotate.

As a preference of the present disclosure, the drive bases in the electric push rod devices can measure extending-out and retracting strokes of the extending-out rods.

As a preference of the present disclosure, each steering control mechanism further includes a program controller. The program controllers are in signal connection with the drive bases and the wheel motors, and can make output power of the wheel motors change with changes in the strokes of the extending-out rods.

As a preference of the present disclosure, the supporting bottom plate includes an upper bottom plate and a lower bottom plate which are arranged side by side in an up and down direction, and a reinforcing rib plate is connected between the upper bottom plate and the lower bottom plate.

A small scissor aerial work platform, includes the traveling chassis and further includes a scissor mechanism and a work platform. A lower end of the scissor mechanism is installed on the supporting bottom plate, and the work platform is installed at an upper end of the scissor mechanism.

### Beneficial effects:

The costs of the traveling chassis produced are effectively reduced, a size of the traveling chassis is also reduced, a loading space of the traveling chassis is reduced, and freight costs are reduced; and in addition, a height of the work platform is low when a scissor frame is in a folded state after the scissor frame and the work platform are installed on the traveling chassis to form complete equipment for use, a user can directly step in or out of the work platform, and compared with a manner that the user climbs a ladder to come in and go out of the work platform, it is more convenient and rapider.

### BRIEF DESCRIPTION OF THE DRAWINGS

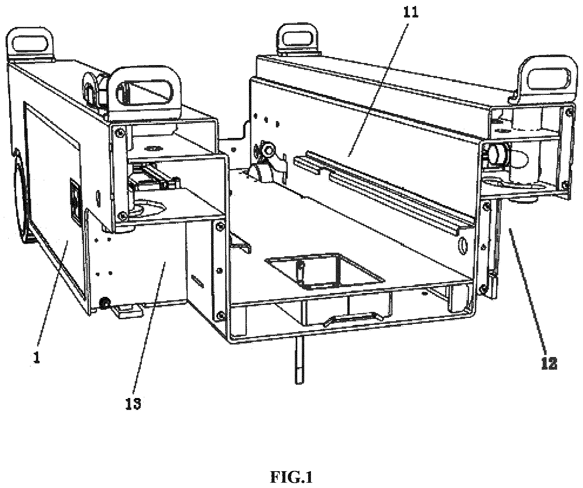

FIG. 1 is a schematic diagram of a base of a traveling chassis of the present disclosure;

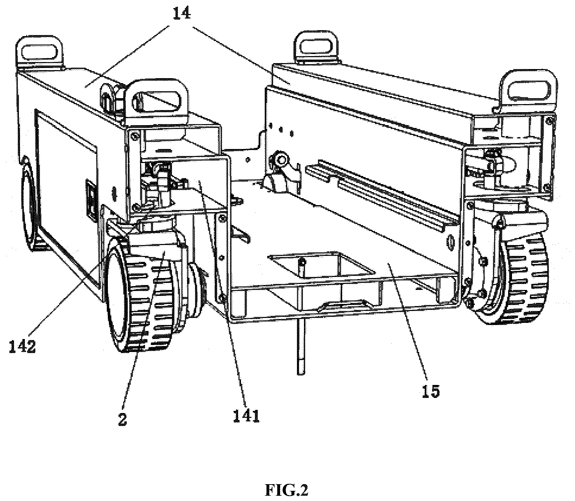

FIG. 2 is a schematic diagram of a traveling chassis with steering wheel assemblies in FIG. 1;

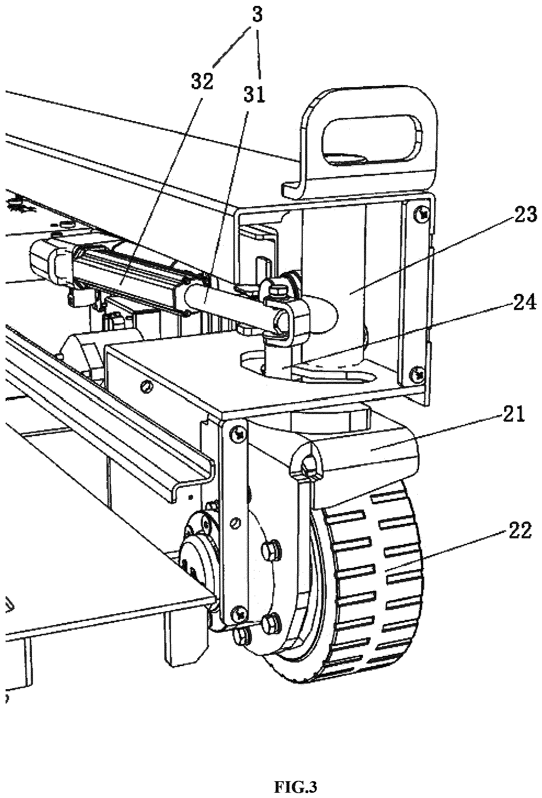

FIG. 3 is a structural schematic diagram of steering wheel assemblies and electric push rod devices;

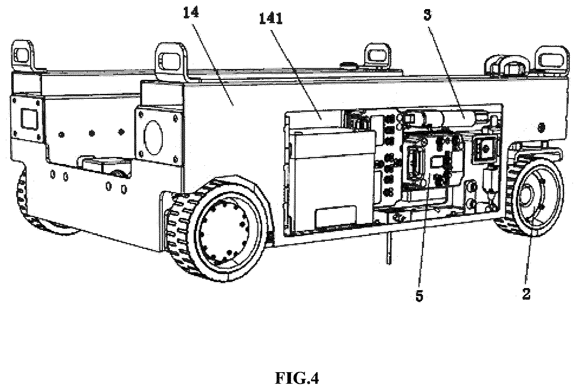

FIG. 4 is a schematic diagram of supporting box bodies;

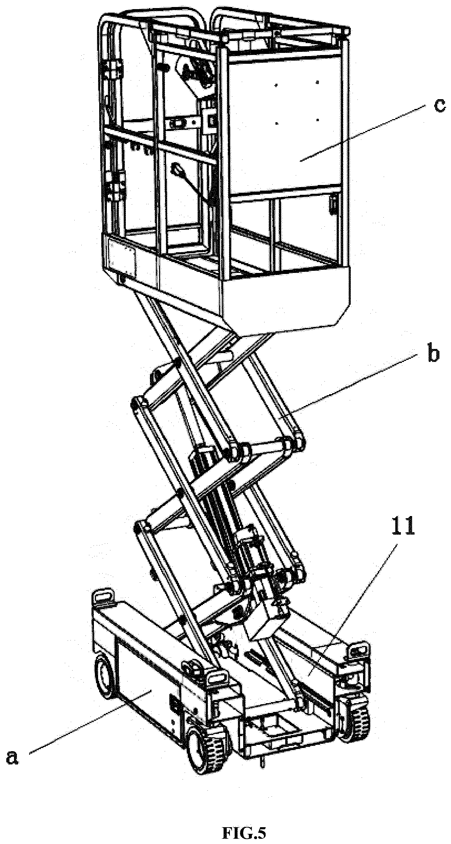

FIG. 5 is a schematic diagram of a small scissor aerial work platform of the present disclosure; and

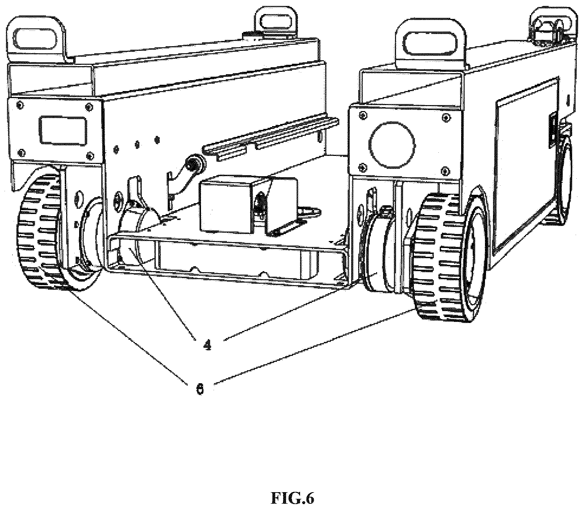

FIG. 6 is a schematic diagram of rear drive wheels and wheel motors.

In the drawings: 1. Base, 11. Scissor-stored groove, 12. Left wheel set accommodating groove, 13. Right wheel set accommodating groove, 14. Supporting box body, 15. Supporting bottom plate, 141. Accommodating chamber, 142. Arc-shaped through groove, 2. Steering wheel assembly, 21. Steering wheel seat, 22. Wheel, 23. Rotary shaft, 24. Steering support rod, 3. Electric push rod device, 31. Extending-out rod, 32. Drive base, 4. Wheel motor, 5. Program controller, 6. Rear drive wheel, a. Traveling chassis, b. Scissor mechanism, and c. Work platform.

### DETAILED DESCRIPTION OF THE EMBODIMENTS

The following specific embodiments are only intended to explain the present disclosure instead of limiting it, those skilled in the art can make modifications to the embodiments without creative contributions according to requirements after reading the specification, but the modifications are protected by patent laws as long as they fall within the scope of claims of the present disclosure.

A traveling chassis of the present disclosure, includes a base 1 and oppositely-arranged left and right steering wheel assemblies 2. The base 1 is of a concave structure, a scissor-stored groove 11 with an upward opening is formed in the base, a left wheel set accommodating groove 12 and a right wheel set accommodating groove 13 which are used for accommodating the steering wheel assemblies 2 and provided with downward openings are further formed in a front end of the base 1, and a lower portion of the scissor-stored groove 11 is located between the left wheel set accommodating groove 12 and the right wheel set accommodating groove 13. The scissor-stored groove 11 occupies a space between the left wheel set accommodating groove 12 and the right wheel set accommodating groove 13, and its groove bottom is sufficiently close to ground. On one hand, a lower surface of the base 1 is sufficiently close to the ground, so that an overall height of the base 1 is sufficiently reduced. On the other hand, an initial height of a scissor frame installed in the scissor-stored groove 11 is reduced, so that a height of a highest point of the scissor frame is reduced when the scissor frame is in an initial folded state. An overall height of equipment is low when the scissor frame is in the folded state after the scissor frame and a work platform c are installed on the traveling chassis a to form a scissor aerial work platform, which can meet standards of relevant countries (e.g., the United States), and the scissor aerial work platform can be directly exported to relevant countries for sales without installing a ladder as long as it is lower than the standards for additionally arranging the ladder, as stipulated by the relevant countries in the field of scissor aerial work platforms. Thus, the costs of the traveling chassis produced are effectively reduced, a size of the traveling chassis is also reduced, a loading space of the traveling chassis is reduced, and freight costs are reduced. In addition, a height of the work platform c is low when the scissor frame is in the folded state after the scissor frame and the work platform c are installed on the traveling chassis a to form the complete equipment for use, a user can directly step in or out of the work platform c, and compared with a manner that the user climbs the ladder to come in and go out of the work platform c, it is more convenient and rapider.

In the above solution of the present disclosure, the scissor-stored groove 11 occupies the space between the left wheel set accommodating groove 12 and the right wheel set accommodating groove 13. The left and the right steering wheel assemblies 2 are also separated by a portion, where the scissor-stored groove 11 is formed, in the base 1 after the steering wheel assemblies 2 are installed in the left wheel set accommodating groove 12 and the right wheel set accommodating groove 13 respectively, so a linkage frame can no longer be installed above the left and the right steering wheels to achieve a solution that the left and the right steering wheel assemblies 2 are simultaneously driven by the linkage frame to rotate. If the linkage frame must be used, it is necessary to install the linkage frame in front of the base 1 and the steering wheel assemblies 2, and the linkage frame is exposed out of the traveling chassis a, and moves outside, leading to potential safety hazards and influences on attractive appearance of the traveling chassis a. Thus, in the embodiment, preferably, the traveling chassis a further includes left and right steering control mechanisms, the left steering control mechanism can drive the left steering wheel assembly 2 to steer, and the right steering control mechanism can drive the right steering wheel assembly 2 to steer, so that the left and the right steering wheel assemblies 2 are independently controlled. The linkage frame is no longer used, the space between the left and the right steering wheel assemblies 2 is vacated to the base 1, and the base 1 sinks to form the scissor-stored groove 11, so as to reduce the height of the base 1.

In traveling trolleys of scissor aerial work platforms common on the current market, components for driving traveling, components for driving steering and various control systems are usually installed on chassis, chassis bodies in these traveling trolleys are thick, and the above components can be accommodated in cavities formed in the chassis bodies. However, in the traveling chassis a of the embodiment, as the scissor-stored groove 11 is formed in a middle of the base 1, most of a volume in the middle of the base 1 is occupied by the scissor-stored groove 11. A volume of a base 1 body mainly exists on left and right sides of the scissor-stored groove 11, and various control components of the traveling chassis a need to be installed in the base 1 body. Specifically, the base 1 includes left and right supporting box bodies 14 and a supporting bottom plate 15 transversely erected between the two supporting box bodies 14, the supporting bottom plate 15 is connected with bottoms of the supporting box bodies 14, the scissor-stored groove 11 is enclosed by the supporting box bodies 14 and the supporting bottom plate 15, the left wheel set accommodating groove 12 is located in a front end of the left supporting box body 14, the right wheel set accommodating groove 13 is located in a front end of the right supporting box body 14, accommodating chambers 141 are formed in the supporting box bodies 14, and the steering control mechanisms are located in the accommodating chambers 141. The base 1 body is formed by the left and the right supporting box bodies 14 and the supporting bottom plate 15, and is of a structure shaped like a Chinese character ' 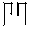 ',and the supporting box bodies 14 not only form the scissor-stored groove 11 in the middle, but also provide installation spaces for the steering control mechanisms, so that the steering control mechanisms and other control components are all installed in the accommodating chambers 141 of the supporting box bodies 14, so as to be prevented from interfering with the scissor-stored groove 11. As the left and the right steering wheel assemblies 2 are both independently controlled by the steering control mechanisms to steer, the left steering control mechanism is installed in the accommodating chamber 141 of the left supporting box body 14, and the right steering control mechanism is installed in the accommodating chamber 141 of the right supporting box body 14. Thus, the left and the right steering control mechanisms can also be prevented from interfering with each other, and meanwhile the control components in the accommodating cavities 141 can be conveniently detached from side edges and maintained after breaking down.

In the traveling trolleys of the existing scissor aerial work platforms, hydraulic cylinders are usually used for driving wheels 22 to steer. However, the hydraulic systems are not suitable for being used on high-temperature and fire-prone occasions, and are high in price and maintenance cost, large energy losses are generated during transmission due to excess energy conversion links, and oil leakage of the hydraulic systems may frequently occur, resulting in pollution to workplaces. It is unnecessary to use expensive control systems with a high bearing capacity such as the hydraulic systems for driving steering. In the embodiment, preferably, each steering control mechanism includes an electric push rod device 3, each electric push rod device 3 includes a drive base 32 and an extending-out rod 31, an extending-out top end of each extending-out rod 31 is rotationally connected with the corresponding steering wheel assembly 2, and each drive base 32 is rotationally connected with the corresponding supporting box body 14. The steering wheel assemblies 2 are driven to rotate in a manner that the extending-out rods 31 extend out of and retract into the drive bases 32, so that cleanliness, high efficiency and low energy consumption are achieved. The steering control mechanisms are simple in structure, do not occupy excess spaces in the accommodating chambers 141 of the supporting box bodies 14, ensure the cleanliness of the accommodating chambers 141, and prevent other components in the accommodating chambers 141 from being polluted.

As the steering wheel assemblies 2 are located in the left wheel set accommodating groove 12 and the right wheel set accommodating groove 13, the left and the right steering wheel assemblies 2 are separated by the scissor-stored groove 11, and the steering control mechanisms are located in the accommodating chambers 141 of the supporting box bodies 14, the steering wheel assemblies 2 need to partially extend into the accommodating chambers 141 to be connected with the steering control mechanisms. In the embodiment, each steering wheel assembly 2 includes a steering wheel seat 21, a wheel 22 rotationally installed on the steering wheel seat 21, a rotary shaft 23 fixed to the steering wheel seat 21, and a steering support rod 24 as so. The rotary shafts 23 upright penetrate into the supporting box bodies 14, and can rotate around their central axes, the steering support rods 24 extend into the supporting box bodies 14, and are rotationally connected with the extending-out top ends of the extending-out rods 31, and arc-shaped through grooves 142 allowing the steering support rods 24 to penetrate and move are formed in the supporting box bodies 14. The electric push rod devices 3 are started during steering, so the extending-out rods 31 extend out or retract to drive the steering support rods 24 to move, thereby driving the steering wheel seats 21 to rotate along with the rotary shafts 23, so as to achieve steering of the wheels 22. The steering support rods 24 move within a limited range of the arc-shaped through grooves 142 in this process.

When the traveling chassis a is in steering advancing, speeds of the left and the right wheels 22 are different, that is, the speed of the wheel 22 steering in a small circle is low while the speed of the wheel 22 steering in a large circle is high. In the embodiment, the left and the right steering wheel assemblies 2 are not provided with power devices, and the whole traveling chassis is pushed to advance by rear drive wheels, so that the traveling chassis a further includes the left and the right rear drive wheels 6 and left and right wheel motors 4, the left wheel motor 4 drives the left rear drive wheel 6 to rotate, and the right wheel motor 4 drives the right rear drive wheel 6 to rotate. By independently controlling rotating speeds of the left and the right rear drive wheels 6 by the two wheel motors 4, the left and the right steering wheel assemblies 2 can also be kept at different rotating speeds during steering, so as to adapt to a steering condition, thereby ensuring that the traveling chassis a is kept stable during steering. Furthermore, preferably, the drive bases 32 in the electric push rod devices 3 can measure extending-out and retracting strokes of the extending-out rods 31, and different strokes of the extending-out rods 31 correspond to different angles by which the wheels 22 rotate, so angles by which the wheels 22 rotate at a certain moment can be recorded. When the traveling chassis a is in steering driving, the left and the right wheels 22 are not necessarily parallel, and may have a tiny angle deviation, which aims at meeting steering design requirements. Whether the left and the right wheels are parallel, the right wheel 22 rotates by a corresponding angle when the left wheel 22 rotates by a certain angle, at this moment, the left wheel 22 corresponds to one speed, the right wheel 22 also corresponds to one speed, these four variables correspond to each other all the time, and it is necessary to write corresponding conversion formulas of the above four variables into programs for control. Thus, in the embodiment, preferably, each steering control mechanism further includes a program controller 5. The program controllers 5 are in signal connection with the drive bases 32 and the wheel motors 4, and can make output power of the wheel motors 4 change with changes in the strokes of the extending-out rods 31. Meanwhile, the program controllers 5 control a corresponding relation between the angles by which the left and the right wheels 22 rotate, so as to achieve automation and intelligence of the steering control mechanisms and improve steering precision.

The groove bottom of the scissor-stored groove 11 is formed by the supporting bottom plate 15. In actual application, the scissor frame is installed on the supporting bottom plate 15, and a thickness of the supporting bottom plate 15 should be reduced as much as possible on the premise of ensuring supporting strength, so that the initial height of the scissor frame is reduced. The supporting bottom plate 15 does not need to play a role in accommodating other components as in the embodiment, various control components are installed in the accommodating chambers 141 of the left and the right supporting box bodies 14. Thus, in the embodiment, preferably, the supporting bottom plate 15 includes an upper bottom plate and a lower bottom plate which are arranged side by side in an up and down direction, left and right sides of the upper bottom plate and the lower bottom plate are fixedly connected with the supporting box bodies, and a reinforcing rib plate can also be arranged between the upper bottom plate and the lower bottom plate, thereby ensuring the strength of the supporting bottom plate 15 and reducing the thickness of the supporting bottom plate 15. Meanwhile, a narrow accommodating space is formed between the upper bottom plate and the lower bottom plate for installation of part of parts.

A small scissor aerial work platform of the present disclosure, includes the traveling chassis a and further includes a scissor mechanism b and a work platform c. A lower end of the scissor mechanism b is installed on the supporting bottom plate 15, and the work platform c is installed at an upper end of the scissor mechanism b. When the scissor mechanism b is in an initial folded state, part or all of the scissor mechanism b is located in the scissor-stored groove 11, so the work platform c is at a low height, the scissor aerial work platform can be directly exported to countries for sales without installing a ladder as long as it is lower than standards for height on the installation-free ladder, of relevant countries (e.g. the United States), and therefore machining costs and freight costs are greatly reduced. As the work platform c is at a low height, a user can directly step in or out of the work platform c, and compared with a manner of climbing the ladder, it is more convenient and rapider.

The above descriptions are merely specific implementations of the present disclosure, which are not intended to limit the protection scope of the present disclosure. Any modification or replacement which is easily conceived by any person skilled in the art within the technical scope described in the present disclosure should fall within the scope of protection the present disclosure. Therefore, the scope of protection of the present disclosure should follow the scope of protection of the claims.

## Claims

1. A traveling chassis, comprising a base (1) and oppositely-arranged left and right steering wheel assemblies (2), wherein the base (1) is of a concave structure, a scissor-stored groove (11) with an upward opening is formed in the base, a left wheel set accommodating groove (12) and a right wheel set accommodating groove (13) which are used for accommodating the steering wheel assemblies (2) and provided with downward openings are further formed in a front end of the base (1), and a lower portion of the scissor-stored groove (11) is located between the left wheel set accommodating groove (12) and the right wheel set accommodating groove (13).

2. The traveling chassis according to claim 1, wherein it further comprises left and right steering control mechanisms, the left steering control mechanism can drive the left steering wheel assembly (2) to steer, and the right steering control mechanism can drive the right steering wheel assembly (2) to steer.

3. The traveling chassis according to claim 2, wherein the base (1) comprises left and right supporting box bodies (14) and a supporting bottom plate (15) transversely erected between the two supporting box bodies (14), the scissor-stored groove (11) is enclosed by the supporting box bodies (14) and the supporting bottom plate (15), the left wheel set accommodating groove (12) is located in a front end of the left supporting box body (14), the right wheel set accommodating groove (13) is located in a front end of the right supporting box body (14), accommodating chambers (141) are formed in the supporting box bodies (14), and the steering control mechanisms are located in the accommodating chambers (141).

4. The traveling chassis according to claim 3, wherein each steering control mechanism comprises an electric push rod device (3), each electric push rod device (3) comprises a drive base (32) and an extending-out rod (31), an extending-out top end of each extending-out rod (31) is rotationally connected with the corresponding steering wheel assembly (2), and each drive base (32) is rotationally connected with the corresponding supporting box body (14).

5. The traveling chassis according to claim 4, wherein each steering wheel assembly (2) comprises a steering wheel seat (21), a wheel (22) rotationally installed on the steering wheel seat (21), a rotary shaft (23) fixed to the steering wheel seat (21), and a steering support rod (24) as so; and the rotary shafts (23) upright penetrate into the supporting box bodies (14), and can rotate around their central axes, the steering support rods (24) extend into the supporting box bodies (14), and are rotationally connected with the extending-out top ends of the extending-out rods (31), and arc-shaped through grooves (142) allowing the steering support rods (24) to penetrate and move are formed in the supporting box bodies (14).

6. The traveling chassis according to claim 4, wherein the traveling chassis further includes left and right rear drive wheels (6) and left and right wheel motors (4), the left wheel motor (4) drives the left rear drive wheel (6) to rotate, and the right wheel motor (4) drives the right rear drive wheel (6) to rotate.

7. The traveling chassis according to claim 6, wherein the drive bases (32) in the electric push rod devices (3) can measure extending-out and retracting strokes of the extending-out rods (31).

8. The traveling chassis according to claim 7, wherein each steering control mechanism further includes a program controller (5). The program controllers (5) are in signal connection with the drive bases (32) and the wheel motors (4), and can make output power of the wheel motors (4) change with changes in the strokes of the extending-out rods (31).

9. The traveling chassis according to claim 3, wherein the supporting bottom plate (15) comprises an upper bottom plate and a lower bottom plate which are arranged side by side in an up and down direction, and left and right sides of the upper bottom plate and the lower bottom plate are fixedly connected with the supporting box bodies.

10. A small scissor aerial work platform, wherein it comprises the traveling chassis (a) according to any one of claims 1-9 and further comprises a scissor mechanism (b) and a work platform (c); and a lower end of the scissor mechanism (b) is installed on the supporting bottom plate (15), and the work platform (c) is installed at an upper end of the scissor mechanism (b).
